# EUROPEAN PATENT APPLICATION

(11) **EP 4 207 873 A1**
(43) Date of publication of application: **05.07.2023**
(21) Application number: 20955802.2
(22) Date of filing: 30.09.2020
(51) Int. Cl.: H04W 36/00

(54) **NETWORK SLICING INFORMATION PROCESSING METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); WANG, Shukun, Dongguan, Guangdong 523860 (CN)
(74) Representative: Taor, Simon Edward William
(86) International application number: PCT/CN2020/119693
(87) International publication number: WO 2022/067779

(57) **Abstract**

The present application relates to a network slicing information processing method, a terminal device, and a network device. The method comprises: the terminal device receives first information, the first information comprising network slicing information and a limiting condition corresponding to the network slicing information, and the first information being used for determining priority information of a cell or frequency point by the terminal device when performing cell selection or reselection. Embodiments of the present application can be used for determining the cell or frequency point priority information by the terminal device when performing the cell selection or reselection.

## Description

### TECHNICAL FIELD

The present disclosure relates to the communication field, and more specifically, relates to a method for processing network slicing information, a terminal device and a network device.

### BACKGROUND

In order to meet the requirements of related industries for low latency, mobility, reliability, and location accuracy of wireless communications, it is necessary to enhance the services (such as vertical services) supported by the access network. One way is based on network slicing (slicing) technology to provide services with lower latency, more targeted, greater flexibility and higher scalability for multiple services with different requirements. The currently introduced enhancements to slicing in the access network may involve network slicing-based cell reselection or network slicing-based random access RACH (random access channel) configuration, and the like.

The existing slicing technology mainly involves the selection of core network nodes, and less involves the radio access network (RAN) side. If the slicing mechanism on the RAN side is introduced, the network slices supported by different cells may be different, which may affect the cell reselection process of the terminal. For example, the cell or frequency point corresponding to the slice that supports the service requirement may be a low priority cell or frequency point, which may cause the UE to be unable to reselect to a suitable cell or frequency point.

### SUMMARY

In view of this, an embodiment of the present application provides a method for processing network slice information, a terminal device, and a network device, which can be used for determining priority information of cells or frequency points when the terminal device performs cell selection or reselection.

An embodiment of the present application provides a method for processing network slicing information, which is applied to a terminal device, including:
The terminal device receives first information, wherein the first information includes network slicing information and a restriction condition corresponding to the network slicing information, and the first information is used by the terminal device to determine the priority information of the cell or frequency point used when performing cell selection or reselection.

An embodiment of the present application provides a method for processing network slicing information, which is applied to a network device, including:
The network device sends first information to a terminal device, wherein the first information includes network slicing information and a restriction condition corresponding to the network slicing information, and the first information is used by the terminal device to determine the priority information of the cell or frequency point used when performing cell selection or reselection.

An embodiment of the present application also provides a terminal device, including:
A receiving module, configured to receive first information, wherein the first information includes network slicing information and a restriction condition corresponding to the network slicing information, and the first information is used by the terminal device to determine the priority information of the cell or frequency point used when performing cell selection or reselection.

An embodiment of the present application also provides a network device, including:
A sending module, configured to send first information to a terminal device, wherein the first information includes network slicing information and a restriction condition corresponding to the network slicing information, and the first information is used by the terminal device to determine the priority information of the cell or frequency point used when performing cell selection or reselection.

An embodiment of the present application also provides a terminal device, including: a processor and a memory, the memory is used to store a computer program, and the processor invokes and runs the computer program stored in the memory to execute the method as described above.

An embodiment of the present application also provides a network device, including: a processor and a memory, the memory is used to store a computer program, and the processor invokes and runs the computer program stored in the memory to execute the method as described above.

An embodiment of the present application also provides a chip, including: a processor, configured to invoke and run a computer program from a memory, so that a device installed with the chip executes the method as described above.

An embodiment of the present application further provides a computer-readable storage medium for storing a computer program, wherein the computer program causes a computer to execute the above method.

An embodiment of the present application further provides a computer program product, including computer program instructions, wherein the computer program instructions cause a computer to execute the above method.

An embodiment of the present application further provides a computer program, the computer program causes a computer to execute the above method.

By configuring restriction conditions for the frequency point priority information of cell selection/reselection corresponding to network slices, the embodiment of the present application allows the terminal device to determine the priority information of the cell/frequency point to be used according to the restriction conditions when performing cell selection/reselection, which can not only meet the requirements of network deployment, but also follow the existing regulations as much as possible, can reduce the complexity of terminal device when considering slice information in cell selection/reselection, and help the terminal device to access services preferentially required slices.

### BRIEF DESCRIPTION OF THE DRAWINGS

FIG. 1 is a communication system architecture according to an embodiment of the present application.
FIG. 2 and FIG.3 are schematic diagrams of the four-step random access process of the contention-based random access method and the non-contention-based random access method respectively.
FIG. 4 is a schematic diagram of a comparison effect between a four-step random access process and a two-step random access process.
FIG. 5 is a flowchart of a method for processing network slice information according to an embodiment of the terminal side of the present application.
FIG. 6 is a flowchart of a method for processing network slice information in an embodiment of the network side of the present application.
Fig. 7 is a schematic diagram of an interaction process of network slice information processing according to an embodiment of the present application.
FIG. 8 is a schematic diagram of an interaction process of network slice information processing according to another embodiment of the present application.
FIG. 9 is a schematic structural block diagram of a terminal device according to an embodiment of the present application.
FIG. 10 is a schematic structural block diagram of a network device according to an embodiment of the present application.
Fig. 11 is a schematic block diagram of a communication device according to an embodiment of the present application.
Fig. 12 is a schematic block diagram of a chip according to an embodiment of the present application.
FIG. 13 is a schematic block diagram of a communication system according to an embodiment of the present application.

### DETAILED DESCRIPTION

Hereinafter, the technical implementations in the embodiments of the present application will be described with reference to the drawings in the embodiments of the present application.

The technical solutions of the embodiments of the present application can be applied to various communication systems, for example: Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced long term evolution (LTE-A) system , New Radio (NR) system, LTE-based access to unlicensed spectrum, (LTE-U) system, NR-based access to unlicensed spectrum (NR-U) system, Non-Terrestrial Networks (NTN) system, Universal Mobile Telecommunications System (UMTS), Wireless Local Area Networks (WLAN), Wireless Fidelity (WiFi), fifth-generation communication (5th-Generation, 5G) system or other communication systems, etc.

Generally speaking, the number of connections supported by traditional communication systems is limited and easy to implement. However, with the development of communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc., the embodiments of the present application may also be applied to these communication systems.

Optionally, the communication system in the embodiment of the present application can be applied to a carrier aggregation (CA) scenario, a dual connectivity (DC) scenario, or a standalone (SA) deployment scene.

The embodiments of the present application describe various embodiments in conjunction with network device and terminal device, wherein the terminal device may also be referred to as user equipment (UE), access terminal, user unit, user station, mobile station, mobile site, remote station, remote terminal, mobile device, user terminal, terminal, wireless communication device, user agent or user device, etc.

The terminal device can be a station (ST) in a WLAN, a cellular phone, a cordless phone, a Session Initiation Protocol (SIP) phone, a Wireless Local Loop (WLL) station, a Personal Digital Assistant (PDA) device, handheld devices with wireless communication functions, computing devices or other processing devices connected to wireless modems, vehicle-mounted devices, wearable devices, next-generation communication systems such as terminal devices in NR networks, or the terminal device in a future evolved public land mobile network (PLMN) network, etc.

In the embodiment of this application, the terminal device can be deployed on land, including indoor or outdoor, handheld, wearable or vehicle-mounted; the terminal device can also be deployed on water (such as ships, etc.); the terminal device can also be deployed in the air (such as aircraft, balloons and satellites).

In this embodiment of the application, the terminal device may be a mobile phone, a tablet computer (Pad), a computer with a wireless transceiver function, a virtual reality (VR) terminal device, an augmented reality (AR) terminal device, wireless terminal devices in industrial control, wireless terminal devices in self driving, wireless terminal devices in remote medical, wireless terminal devices in smart grid, wireless terminal device in transportation safety, wireless terminal device in smart city, or wireless terminal device in smart home.

As an example but not a limitation, in this embodiment of the present application, the terminal device may also be a wearable device. Wearable devices can also be called wearable smart devices, which is a general term for the application of wearable technology to intelligently design daily wear and develop wearable devices, such as glasses, gloves, watches, clothing and shoes. A wearable device is a portable device that is worn directly on the body or integrated into the user's clothing or accessories. Wearable devices are not only a hardware device, but also achieve powerful functions through software support, data interaction, and cloud interaction. Generalized wearable smart devices include those of full-featured, large-sized, complete or partial functions without relying on smart phones, such as smart watches or smart glasses, etc., and those only focus on a certain type of application functions, and need to cooperate with other devices such as smart phones, such as various smart bracelets and smart jewelry for physical sign monitoring.

In the embodiment of this application, the network device may be a device used to communicate with mobile devices, and the network device may be an access point (AP) in WLAN, a base transceiver station (BTS) in GSM or CDMA, or a base station (NodeB, NB) in WCDMA, or an evolved base station (Evolutional Node B, eNB or eNodeB) in LTE, or a relay station or an access point, or a vehicle-mounted device, a wearable device, and a network device (gNB) in an NR network, or the network device in the future evolution of the PLMN network, etc.

As an example but not a limitation, in this embodiment of the present application, the network device may have a mobile feature, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station installed on land, water, and other locations.

In this embodiment of the application, the network device may provide services for a cell, and the terminal device communicates with the network device through the transmission resources (for example, frequency domain resources, or spectrum resources) used by the cell. The cell may be a cell corresponding to a network device (e.g., a base station), the cell may belong to a macro base station, or a base station corresponding to a small cell, wherein the small cell may include: Metro cell, Micro cell, Pico cell, Femto cell, etc. These small cells have the characteristics of small coverage and low transmission power, and are suitable for providing high-speed data transmission services.

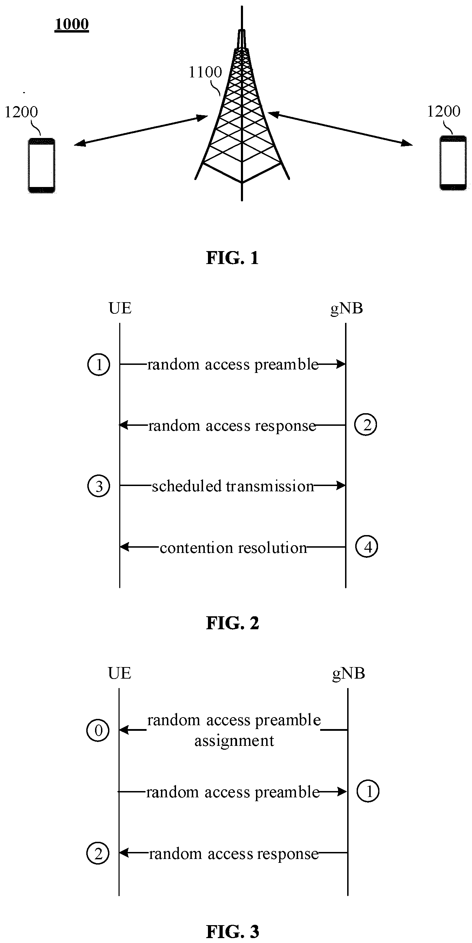

Fig. 1 schematically shows a network device 1100 and two terminal devices 1200, optionally, the wireless communication system 1000 may include multiple network devices 1100, and the coverage of each network device 1100 may include other numbers terminal device, which is not limited in the embodiment of this application. Optionally, the wireless communication system 1000 shown in FIG. 1 may further include other network entities such as a mobility management entity (MME), an access and mobility management function (AMF), etc., which is not limited in the embodiment of the application.

It should be understood that the terms "system" and "network" are often used interchangeably herein. The term "and/or" in this article is an association relationship describing associated objects, which means that there can be three relationships for the related objects, for example, A and/or B can mean these three situations: A exists alone, A and B exist simultaneously, and B exists alone. The character "/" in this article generally indicates that the contextual objects are an "or" relationship. In the description of the embodiments of the present application, the term "corresponding" may indicate that there is a direct or indirect correspondence between the two, or that there is an association between the two, or the relation of indicating and being indicated, configuring and being configured, or the like.

In order to clearly illustrate the ideas of the embodiments of the present application, a brief description is first given of the process of cell reselection and random access in a communication system.

Firstly, regarding cell reselection, it is a process in which the terminal device UE monitors the signal quality of neighboring cells and the current cell in idle mode and selects a cell with good signal quality to provide services. During the process of UE performing cell selection and cell reselection in the idle state, in order to meet the UE load balancing in the idle state, a cell reselection strategy based on frequency priority has been defined. When the signal quality and level of the neighboring cell meet the S criterion and the specified reselection decision criterion, the UE will access the neighboring cell and camp on. In the reselection of cells with the same frequency or different frequencies with the same "frequency priority", the R criterion is used to reselect the cells, that is, the cells are sorted according to the signal quality, and the cell with the best signal quality is selected as the candidate reselection target cell.

For a cell with high frequency priority, when the signal quality of the cell meets a certain threshold, the UE will reselect to the cell with high frequency priority; for a cell with low frequency priority, only when the signal quality of the serving cell is lower than a certain threshold, then will the UE reselect to a cell with high frequency priority.

Secondly, regarding the four-step random access process (4-step RACH), the reason value for triggering/establishing the random access process may be carried in the third step message (Msg3). Specifically, the NR system mainly supports two random access methods, referring to FIG. 2 and FIG. 3, which are respectively a contention-based random access method and a non-contention-based random access method. The general processing steps are described below.

Step1: The terminal selects the preamble and physical random access channel PRACH resources (such as time-frequency resources and code domain resources):
wherein, the terminal sends the selected preamble on the selected PRACH time-frequency resource, and the base station can estimate the uplink timing and the size of the grant required for the terminal to transmit Msg 3 based on the preamble (usually approximate values can be estimated, but precise values cannot be estimated).

Step2: The network sends a random access response (RAR) to the terminal:
wherein, after the terminal sends the first step message (Msg1), it opens a RAR window, and monitors the physical downlink control channel (PDCCH) in this window. The PDCCH is scrambled by a random access radio network temporary identifier (RA-RNTI).

After the terminal device successfully monitors the PDCCH scrambled by RA-RNTI, the terminal device can obtain the physical downlink shared channel (PDSCH) scheduled by the PDCCH, which includes the RAR, wherein,
The RAR subheader includes a Backoff Indicator (BI), and the BI is used to indicate the backoff time for retransmitting the first step message (Msg1);
The RAR includes the random access preamble identifier (RAPID), and the RAPID is a response to a preamble index corresponding to the received preamble by the network;
The payload of the RAR includes a timing advance (Timing Advance of GSM, TAG), and the TAG is used to adjust the uplink timing;
The RAR includes a UL grant, which is an uplink resource indication for scheduling the terminal device to send the third step message;
The RAR includes a temporary cell RNTI (TC-RNTI), and the TC-RNTI is used to scramble the PDCCH (initial access) of the fourth step message (Msg4).

Step3: The terminal transmits the RRC message on the scheduled resource.

The message of Msg3 is mainly used to inform the base station which event triggers the RACH process. For example, for the initial random access process, Msg3 can carry the terminal device identity (UE ID) and radio resource control (RRC) establishment cause; for the case of RRC re-establishment, Msg3 can carry UE ID and establishment cause in connection state. The ID carried by Msg3 can make the contention conflict be resolved in the fourth step.

Step4: Competitive conflict resolution, wherein Msg 4 is used for conflict resolution.

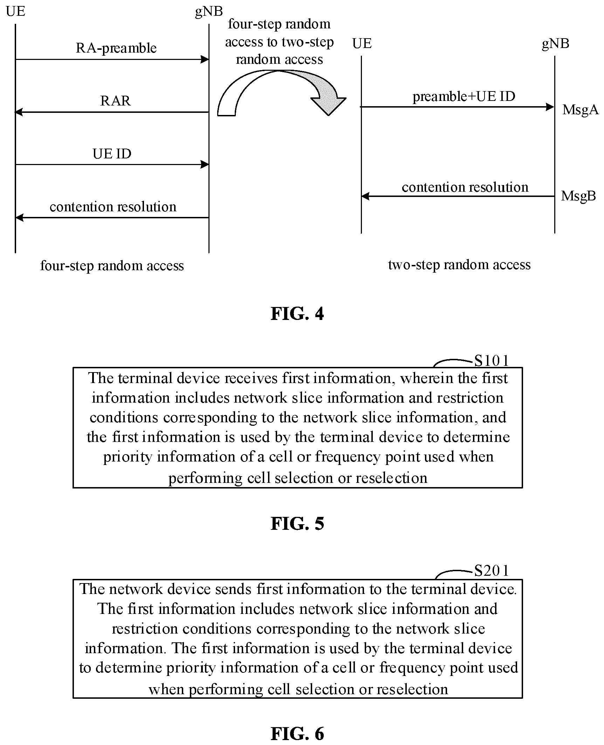

Thirdly, regarding the two-step random access process (2-step RACH), the two-step random access can improve the delay and reduce the signaling overhead. Referring to FIG. 4, an existing basic two-step random access method is to transmit Msg1 and Msg3 of the four-step RACH through Msg A during the two-step RACH process, and transmit Msg2 and Msg4 of the four-step RACH through Msg B. In the two-step RACH process, Msg A carries the cause value for triggering/establishing the random access process.

As mentioned above, in implementation, the cell or frequency point corresponding to the slice that supports the service requirement may be a low priority cell or frequency point, which may cause the terminal to be unable to reselect a suitable cell or frequency point. In addition, if different frequency points or regions support different slices, the slice-related information (such as slices, frequency points, and frequency point priority information) saved by the UE may no longer be available. If the information continues to be used, the UE may not be able to reselect to the best cell supporting the slice, which will affect subsequent service transmission of the relevant slice by the UE.

In view of this, an embodiment of the present application provides a method for processing network slice information, which is applied to a terminal device. Referring to FIG. 5, the method includes:
S101. The terminal device receives first information, wherein the first information includes network slice information and restriction conditions corresponding to the network slice information, and the first information is used by the terminal device to determine priority information of a cell or frequency point used when performing cell selection or reselection.

By configuring restriction conditions for the frequency point priority information of cell selection/reselection corresponding to network slices, the embodiment of the present application allows the terminal device to determine the priority information of the cell/frequency point to be used according to the restriction conditions when performing cell selection/reselection, which can not only meet the requirements of network deployment, but also follow the existing regulations as much as possible, can reduce the complexity of terminal device when considering slice information in cell selection/reselection, and help the terminal device to access services preferentially required slices.

According to an embodiment of the present application, optionally, the restriction condition corresponding to the network slicing information includes at least one of the following: a valid period of the network slicing information, and a valid range of the network slicing information.

According to an embodiment of the present application, optionally, the valid period of the network slicing information is a finite value, wherein the valid period includes a start time and an end time, or the valid period includes a valid time interval.

Optionally, the valid period of the network slicing information is an infinite value, wherein the valid period includes a start time.

Optionally, the start time of the valid period of the network slicing information includes at least one of the following: the time when the terminal device receives the first information, and the time corresponding to then end of a predetermined time period after the time when the terminal device receives the first information.

According to an embodiment of the present application, optionally, the valid range of the network slice information is at least one of the following: a cell, a cell list, a radio access network RAN area, a RAN area list, a tracking area (TA), a TA list, a frequency point (frequency), a frequency point list (frequency list), a public land mobile network PLMN, and a PLMN list.

According to an embodiment of the present application, optionally, the valid range of the network slice information is identified by at least one of the following: a cell identity, a cell identity list, a RAN area code, a RAN area code list, a TA code, a TA code list, a frequency identification, a frequency identification list, a PLMN identification (PLMN ID), and a PLMN identification list (PLMN ID list).

According to an embodiment of the present application, optionally, the network slice information includes at least one of the following: an identification of the network slice, a priority of the network slice, a correspondence between the network slice and a frequency point, a correspondence between the network slice and a cell, a priority of a frequency point corresponding to the network slice, and a priority of a cell corresponding to the network slice.

According to an embodiment of the present application, optionally, the first information meets at least one of the following conditions:
the first information is information per UE;
the first information is information per slice;
the first information is information per slice list;
the first information is information per cell;
the first information is information per slice per UE;
the first information is information per slice list per UE;
the first information is information per slice per cell;
the first information is information per slice list per cell.

According to an embodiment of the present application, optionally, the first information is carried by system information, and/or, the first information is carried by dedicated radio resource control RRC information.

According to an embodiment of the present application, optionally, if the terminal device is in an RRC inactive state RRC_INACTIVE, the first information is the same as or different from a RAN Notification Area (RNA).

According to an embodiment of the present application, optionally, the terminal device determines second information, and the second information includes location information of the terminal device and/or current cell information of the terminal device; and the terminal device determines according to the first information and the second information, whether to use the priority information of the cell or frequency point stored in the terminal device, and/or whether to update the priority information of the cell or frequency point.

According to an embodiment of the present application, optionally, the information of the current cell of the terminal device includes at least one of the following: an identifier of the current cell, an identifier of a tracking area TA where the current cell is located, and an identifier of a RAN area where the current cell is located, an identifier of a frequency point, and an identifier of a PLMN.

According to an embodiment of the present application, optionally, determining, by the terminal device according to the first information and the second information, whether to use the priority information of the cell or frequency point stored in the terminal device, and/or whether to update the priority information of the cell or frequency point, includes: the terminal device determines according to the second information and the restriction condition corresponding to the network slicing information in the first information, whether the first information is valid, and/or, whether to request updated priority information of the cell or frequency point.

According to an embodiment of the present application, optionally, if the first information is valid, the terminal device determines to use the priority information of the cell or frequency point stored in the terminal device, and/or does not request updated priority information of the cell or frequency point; if the first information is invalid, the terminal device determines not to use the priority information of the cell or frequency point stored in the terminal device, and/or use updated priority information of the cell or frequency point.

According to an embodiment of the present application, optionally, if the system information carrying the first information is information sent in a non-broadcast manner, the terminal device requests the network device to send the system information; and/or, if the system information carrying the first information is information sent by broadcast, the terminal device reads the corresponding system information of the first information; and/or, if the system information carrying the first information is sent by broadcast information, the terminal device requests the network device to send system information carrying the first information; wherein the system information includes a master information block (MIB) or a system information block (SIB), for example, at least one of SIB1, SIB2, SIB3, SIB4, SIB5.

According to an embodiment of the present application, optionally, if the system information carrying the first information is information sent in a non-broadcast manner, the terminal device requests the network device to send dedicated information carrying the first information; and/or, if the system information carrying the first information is information sent by broadcast, the terminal device requests the network device to send dedicated information carrying the first information; wherein the dedicated information includes at least one of the following: an RRC release message, an RRC reestablishment message, an RRC reconfiguration message, an RRC rejection message, downlink control information (DCI), and a media access control control element (MAC CE).

Optionally, the first information is invalid.

According to an embodiment of the present application, optionally, if the first information is obtained through both the system information and the dedicated information, the first information carried in the dedicated information shall prevail.

According to an embodiment of the present application, optionally, if the terminal device is in an inactive state, the terminal device obtains the first information through an RRC release message, and does not obtain the first information through reading system information.

According to an embodiment of the present application, optionally, the terminal device determines whether the first information is valid according to the second information and the restriction conditions corresponding to the network slice information in the first information, including: if the valid period of the network slice information in the restriction condition expires or times out, the first information is invalid; and/or, if the valid range of the network slicing information in the restriction condition is invalid, the first information is invalid; wherein, if the location information of the terminal device and/or the current cell information of the terminal device in the second information does not match the valid range, the valid range is invalid.

According to an embodiment of the present application, optionally, if it is determined not to use the priority information of the cell or frequency point saved in the terminal device or to update the priority information of the cell or frequency point, the terminal device triggers a dedicated message or a dedicated process, at least for reacquiring the priority information of the cell or frequency point.

According to an embodiment of the present application, optionally, the dedicated message includes an RRC connection establishment request message or an RRC connection recovery request message; and/or, the dedicated process includes at least one of the following: random access RACH process, a system information request process, and a UE auxiliary information reporting process.

According to an embodiment of the present application, optionally, a request message is carried by the terminal device in a cause value in the dedicated process or the dedicated message, to reacquire the priority information of the cell or frequency point, or obtain updated priority information of the cell or frequency point.

According to an embodiment of the present application, optionally, the terminal device is in an RRC inactive state, and the method further includes: after sending the dedicated message or dedicated process to the network device, or after sending the update request to the network device, performing, by the terminal device, one of:
receiving, by the terminal device, an RRC release message sent by the network device, which carries the priority information of the cell or frequency point;
reading, by the terminal device, system information sent by the network device, which carries the priority information of the cell or frequency point;
obtaining, by the terminal device, dedicated information sent by the network device, which carries the priority information of the cell or frequency point.

According to an embodiment of the present application, optionally, the RRC release message includes an RRC release packet data convergence protocol protocol data unit RRCRelease PDCP PDU.

Correspondingly, the embodiment of the present application also provides a method for processing network slicing information, which is applied to a network device. Referring to FIG. 6, the method includes:
S201. The network device sends first information to the terminal device. The first information includes network slice information and restriction conditions corresponding to the network slice information. The first information is used by the terminal device to determine priority information of a cell or frequency point used when performing cell selection or reselection.

According to an embodiment of the present application, optionally, the restriction condition corresponding to the network slicing information includes at least one of the following: a valid period of the network slicing information, and a valid range of the network slicing information.

According to an embodiment of the present application, optionally, the valid period of the network slicing information is a finite value, wherein the valid period includes a start time and an end time, or the valid period includes a valid time interval.

Optionally, the valid period of the network slicing information is an infinite value, wherein the valid period includes a start time.

Optionally, the start time of the valid period of the network slicing information includes at least one of the following: a time when the terminal device receives the first information, and a time corresponding to an end of a predetermined time period after the time when the terminal device receives the first information.

According to an embodiment of the present application, optionally, the valid range of the network slice information is at least one of the following: a cell, a cell list, a radio access network RAN area, a RAN area list, a tracking area TA, a TA list, a frequency point, a frequency point list, a public land mobile network PLMN, and a PLMN list.

According to an embodiment of the present application, optionally, the valid range of the network slice information is identified by at least one of the following: a cell identity, a cell identity list, a RAN area code, a RAN area code list, a TA code, a TA code list, a frequency identification, a frequency identification list, a PLMN identification, and a PLMN identification list.

According to an embodiment of the present application, optionally, the network slicing information includes at least one of the following:
an identification of the network slice, a priority of the network slice, a correspondence between the network slice and a frequency point, a correspondence between the network slice and a cell, a priority of a frequency point corresponding to the network slice, and a priority of a cell corresponding to the network slice.

According to an embodiment of the present application, optionally, the first information is carried by system information, and/or, the first information is carried by dedicated radio resource control RRC information.

According to an embodiment of the present application, optionally, if the terminal device is in the RRC inactive state RRC_INACTIVE, the first information is the same as or different from the RAN notification area RNA.

According to an embodiment of the present application, optionally, the terminal device is in the RRC inactive state, and after the terminal device determining not to use the priority information of the cell or the frequency point saved in the terminal device and/or update the priority information of the cell or the frequency point according to the first information and the second information, the method further includes:
receiving, by the first network device, request information or update request information sent by a second network device to request the priority information of the cell or frequency point of the terminal device; and determining, by the first network device, whether to send context information of the terminal device to the second network device; wherein, the second information includes location information of the terminal device and/or current cell information of the terminal device; and the second network device is a network device corresponding to the current cell of the terminal device.

According to an embodiment of the present application, optionally, if it is determined not to send the context information of the terminal device to the second network device, the first network device generates and sends an RRC release message to the second network device, to allow the second network device to send the RRC release message to the terminal device; and if it is determined to send the context information of the terminal device to the second network device, the first network device or the second network device generates and sends the RRC release message to the terminal device, wherein the priority information of the cell or frequency point is carried in the RRC release message.

According to an embodiment of the present application, optionally, the RRC release message includes an RRC release packet data convergence protocol protocol data unit RRCRelease packet data convergence protocol (PDCP) protocol data unit (PDU).

According to an embodiment of the present application, optionally, the terminal device determines according to the second information and the restriction conditions corresponding to the network slice information in the first information, whether the first information is valid, and/or whether to request updated priority information of the cell or frequency point.

According to the network device in the embodiment of the present application, optionally, if the system information carrying the first information is information sent in a non-broadcast manner, in response to the request of the terminal device, the first network device sends system information to the terminal device; and/or, if the system information carrying the first information is information sent by broadcast, the first network device sends system information corresponding to the first information; and/or, if the system information carrying the first information is information sent by broadcast, in response to the request of the terminal device, the first network device sends the system information carrying the first information to the terminal device; wherein, the system information includes a master information block MIB or a system information block SIB. Optionally, the first information is invalid.

According to the network device in the embodiment of the present application, optionally, if the system information carrying the first information is information sent in a non-broadcast manner, in response to the request of the terminal device, the first network device sends dedicated information carrying the first information to the terminal device; and/or, if the system information carrying the first information is information sent by broadcast, in response to the request of the terminal device, the first network device sends dedicated information carrying the first information to the terminal device; wherein the dedicated information includes at least one of the following: an RRC release message, an RRC reestablishment message, an RRC reconfiguration message, and an RRC rejection message. Optionally, the first information is invalid.

According to an embodiment of the present application, optionally, the terminal device determining whether the first information is valid according to the second information and the restriction conditions corresponding to the network slice information in the first information, including:
if the valid period of the network slice information in the restriction condition expires or times out, the first information is invalid; and/or,
if the valid range of the network slicing information in the restriction condition is invalid, the first information is invalid;
wherein, if the location information of the terminal device and/or the current cell information of the terminal device in the second information does not match the valid range, the valid range is invalid.

According to an embodiment of the present application, optionally, if it is determined not to use the priority information of the cell or frequency point saved in the terminal device or to update the priority information of the cell or frequency point, in response to the dedicated message or a dedicated process triggered by the terminal device, the priority information of the cell or frequency point of the terminal device is sent to the terminal device, at least for reacquiring the priority information of the cell or frequency point.

According to an embodiment of the present application, optionally, the dedicated message includes an RRC connection establishment request message or an RRC connection recovery request message; and/or,
The dedicated process includes at least one of the following: a random access RACH process, a system information request process, and a UE auxiliary information reporting process.

According to an embodiment of the present application, optionally, the terminal device carries a request message through the dedicated message or the cause value in the dedicated process to reacquire the priority information of the cell or frequency point, or obtain the updated priority information of the cell or frequency point.

The implementation of the method for processing network slicing information in the embodiment of the present application has been described above through the embodiments, and the specific implementation process of the embodiment of the present application will be described below through a number of specific examples.

### Example 1

In this embodiment, the UE obtains the slice-related first information through a dedicated RRC message, such as RRCrelease, and the first information is used for the UE to determine the priority information of the cell/frequency when performing cell selection/reselection.

The first information may include at least one of the following: a slice identifier, a valid time of the first information, and a valid area/range identifier of the first information.

The valid area/range identifier of the first information can be at least one of the following: cell identity list, RAN area code list, TA code list, frequency identity list, PLMN ID list.

Further, the UE may determine whether to use the saved cell/frequency point priority information according to the first information and the second information, or whether to reacquire the cell/frequency point priority information, or whether to update the cell/frequency point priority information. Wherein, the second information may include at least one of the following: UE location information, and information of a current cell of the UE.

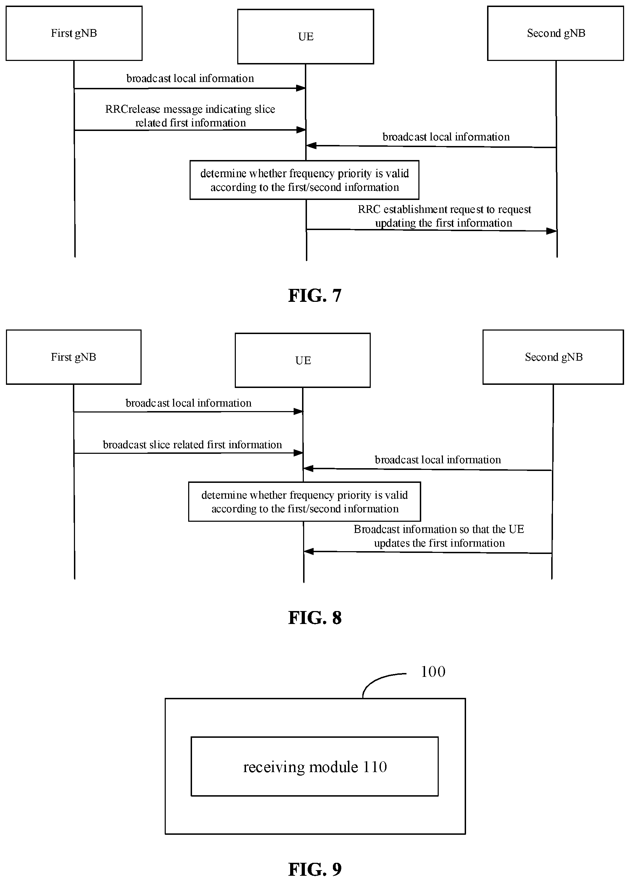

In this embodiment, referring to FIG. 7, the current serving cell of the UE corresponds to the first base station gNB, and when the UE performs cell selection/reselection, it may perform part or all of the following processes:
1) The serving cell broadcasts the system information of the local area. The system information may be, for example, a system information broadcast SIB1.
   The current cell information or cell access-related information of the UE includes at least one of the following: a cell identifier, a RAN area code, a tracking area code, a PLMN identifier, and a frequency point identifier.
2) The serving cell indicates first information related to the UE slice through a dedicated RRC message, and the first information is used for the UE to determine the priority information of the cell/frequency point when performing cell selection/reselection. The dedicated RRC message may be an RRCrelease message.
   a. The first information related to the slice may include at least one of the following:
      i. Slice identification. Specifically, the network slice identification may include network slice selection assistance information (NSSAI), single network slice selection assistance information (S-NSSAI), and network slicing identity (NSID). Optionally, the identifier of the network slice corresponds to a slice supported by the network, for example, includes a slice supported by the serving cell and/or the neighboring cell. Further, the network slice identity may also include the priority of the network slice identity.
      ii. The correspondence between frequency points and slices, or the correspondence between cells and slices, wherein,
         The corresponding relationship can be about a slice supported by the serving cell, or include a slice not supported by the serving cell but supported by neighboring cells;
         The corresponding relationship may be for a slice, or for a slice list, or for a slice of the UE, or for a slice list of the UE.
      iii. The frequency point priority corresponding to a specific slice, or the cell priority corresponding to a specific slice,
         The frequency point priority or the cell priority may be for a slice, or for a slice list, or for a slice of the UE, or for a slice list of the UE.
   b. Regarding the valid time of the first information, for example, the valid time can be a finite value (for example, including a start time and an end time, or a valid time interval), or an infinite value (for example, with a start time, and without end time).
      The valid period of the first information may be for the UE, or for a slice, or for a slice list, or for a slice of the UE, or for a slice list of the UE.
   c. Regarding the valid area/range identifier for the first information.

The valid area/range of first information may be for at least one of the following: cell, cell list, RAN area, RAN area list, TA, TA list, frequency, frequency list, PLMN, PLMN list.

The first information valid area/range identifier may be at least one of the following: cell identity, cell identity list, RAN area code, RAN area code list, TA code, TA code list, frequency identity, frequency identity list, PLMN identity, PLMN identity list.

The valid area/range of first information may be for a UE, or for a slice, or for a slice list, or for a slice of the UE, or for a slice list of the UE.

For the RRC_INACTIVE UE, the first information may be the same as or different from the RAN notification area.

3) The LTE receives information from the network and acquires information for performing cell selection/reselection.
a. The UE determines according to the first information and the second information, whether to use the saved cell/frequency priority information, or whether to reacquire the cell/frequency priority information, or whether to update the cell/frequency priority information.

The second information includes at least one of the following: UE location information (such as the UE location obtained according to positioning), current cell information (such as the cell corresponding to the currently read system information, the cell currently camped on), such as the cell ID, the TA ID where the cell is located, the RAN area ID where the cell is located, the frequency point ID corresponding to the cell, the PLMN ID corresponding to the cell, and the like. Wherein, the UE may determine at least one of its location, TA area, RAN area, cell, frequency point, and PLMN to which it belongs according to the second information.

If the valid time of the first information is invalid (for example, the corresponding timer expires or exceeds the valid time period), and/or the valid area/range in the first information is invalid, the UE considers the stored first information (such as priority and other information) is invalid, or the UE believes that the saved cell/frequency point priority information can no longer be used to perform cell selection or reselection, or the UE needs to re-acquire the cell/frequency point priority information, or the UE needs to update the cell/frequency point priority information, and then perform cell selection or reselection.

Regarding the failure of the valid area/range in the first information, it may include at least one of the following situations: The UE determines according to the second information at least one of the location, the TA area, the RAN area, and the cell of the UE. And according to the valid area/range identifier in the first information, determine at least one of the location, the TA area, the RAN area, the cell, the frequency point, and the PLMN corresponding to the slice information (such as priority information). The UE determines whether both the determined area/location/range information is consistent, and if yes, the UE considers that the saved first information (such as priority and other information) is valid, or the UE considers that the currently saved cell/frequency point priority information can be used to perform cell selection or reselection; otherwise, the UE considers that the saved first information (such as priority information) is invalid, or the UE considers that it needs to reacquire the cell/frequency point priority information, or the UE needs to update the cell/frequency point priority information, and then perform cell selection or reselection.

For example, if any of the valid time and valid area/range of the first information is indicated or configured, and any one of them becomes invalid, the UE considers that the stored first information (such as priority information) is invalid, or the UE considers that it needs to reacquire the cell/frequency point priority information, and then perform cell selection or reselection.

The starting time of the first information may be determined in at least one of the following ways: the time when the UE receives the first information, or the time when the UE receives the first information+N (wherein N is a predefined time). The UE considers that this time is the start time of the valid time of the first information.
b. Before a, the UE acquires and saves the first information. For example, the first information is acquired by the UE in the old cell (corresponding to a first gNB). After the UE moves to a new cell (corresponding to a second gNB), it needs to compare the first information obtained in the old cell with the second information obtained in the new cell.

As an example, according to the first information and the second information, the UE determines whether to use the stored cell/frequency point priority information to perform cell selection or reselection, or to perform cell selection or reselection after reacquiring the cell/ frequency point priority information, wherein the UE considers that the original priority information has become invalid.

For example, the UE moves to a new cell, obtains the system information of the new cell, such as SIB1, and obtains the TA area identifier of the new cell, if the TA area identifier of the new cell and the TA area identifier in the first information stored by the UE are the same, and the valid period of the first information has not expired, then the UE considers that the slice-related information in the saved first information, such as the frequency point priority information, is valid, and does not need to obtain new first information from the new cell (such as triggering the RACH process or the RRC connection establishment process or the RRCresume process to acquire the updated first information.)

4) If according to step 3), the UE considers that the saved first information is invalid, or the original first information is invalid, or needs to reacquire the frequency point priority for cell selection/reselection, the UE triggers RRC connection establishment or the RRCresume process.

Specifically, the UE triggers an RRC connection establishment request or an RRCresume request. The request can be carried through the RACH process. The process or the request message is at least used for the UE to reacquire cell/frequency point priority information.

Correspondingly, the UE sends the cause for triggering the process through the RACH process (such as Msg3 or MSGA) or the RRC request message (such as the cause value).

For RRC_INACTIVE UE, after the target base station receives the cause indication requesting to obtain cell/frequency point priority information, it forwards the cause value to the anchor base station, and the anchor base station determines whether to forward the UE context to the target base station. If not, the anchor base station generates and sends a RRCRelease PDCP PDU to the target base station, and the target base station sends the RRCRelease PDCP PDU to the UE. The RRCRelease PDCP PDU carries cell/frequency point priority information.

This embodiment provides a method for obtaining effective use time/location information of the frequency point priority information for cell selection/reselection corresponding to a slice through a dedicated RRC cell, which ensures the specific use range of the frequency point priority corresponding to the slice, ensures the requirements of network deployment, follows the available standards as much as possible, avoids the complexity caused by UE considering slice information in cell selection/reselection, and at the same time ensures that UE can preferentially access specific slices.

### Example 2

In this embodiment, the UE obtains the slice-related first information through system information, and the first information is used for the UE to determine the priority information of the cell/frequency when performing cell selection/reselection.

The first information may include at least one of the following: a slice identifier, a valid time of the first information, and a valid area/range identifier of the first information.

The valid area/range identifier of the first information can be at least one of the following: cell identity list, RAN area code list, TA code list, frequency identity list, PLMN ID list.

Further, the UE may determine whether to use the saved cell/frequency point priority information according to the first information and the second information, or whether to reacquire the cell/frequency point priority information, or whether to update the cell/frequency point priority information. Wherein, the second information may include at least one of the following: UE location information, and system information of a current cell of the UE.

In this embodiment, referring to FIG. 8, the current serving cell of the UE corresponds to the first base station gNB, and when the UE performs cell selection/reselection, it may perform part or all of the following processes:
1) The serving cell broadcasts the information of the local area. The system information for example is SIB1.
   The current cell information or cell access-related information of the UE includes at least one of the following: a cell identifier, a RAN area code, a tracking area code, a PLMN identifier, and a frequency point identifier.
2) The serving cell broadcasts first information related to the UE slice, and the first information is used for the UE to determine the priority information of the cell/frequency point when performing cell selection/reselection. The system information may be at least one of the following: SIB2, SIB3, SIB4, and SIB5.
   a. The first information related to the slice may include at least one of the following:
      i. Slice identification. Specifically, the slice identification may include at least one of NSSAI, S-NSSAI, and NSID. Optionally, the identifier of the network slice corresponds to a slice supported by the network, for example, includes a slice supported by the serving cell and/or the neighboring cell. Further, the slice identity may also include the priority of the slice identity.
      ii. The correspondence between frequency points and slices, or the correspondence between cells and slices, wherein,
         The corresponding relationship can be a slice supported by the serving cell, or include a slice not supported by the serving cell but supported by neighboring cells;
         The corresponding relationship may be for a slice, or for a slice list.
      iii. The frequency point priority corresponding to a specific slice, or the cell priority corresponding to a specific slice,
         The frequency point priority or the cell priority may be for a slice, or for a slice list.
   b. Regarding the valid time of the first information, for example, the valid time can be a finite value (for example, starting from a start time, and expiring after reaching an end time, or starting from the start time, and expiring after exceeding a valid time interval), or an infinite value (for example, with configuration of a start time, and without configuration of the end time).
      The valid period of the first information may be for a slice, or for a slice list.
   c. Regarding the valid area/range identifier for the first information.

The valid area/range of first information may be for at least one of the following: cell, cell list, RAN area, RAN area list, TA, TA list, frequency, frequency list, PLMN, PLMN list.

The first information valid area/range identifier may be at least one of the following: cell identity, cell identity list, RAN area code, RAN area code list, TA code, TA code list, frequency identity, frequency identity list, PLMN identity, PLMN identity list.

The valid area/range of first information may be for a slice, or for a slice list.

3) The UE receives information from the network and acquires information for performing cell selection/reselection.
a. The UE determines according to the first information and the second information, whether to use the saved cell/frequency priority information, or whether to reacquire the cell/frequency priority information, or whether to update the cell/frequency priority information.

The second information includes at least one of the following: UE location information (e.g., obtained according to positioning), current cell information (such as the cell corresponding to the currently read system information, the cell currently camped on), such as the cell ID, the TA ID where the cell is located, the RAN area ID where the cell is located, the frequency point ID corresponding to the cell, the PLMN to which the cell belongs, and the like. Wherein, the UE may determine at least one of its location, TA area, RAN area, cell, frequency point, and PLMN according to the second information.

If the valid time of the first information is invalid (for example, the corresponding timer expires or exceeds the valid time period), and/or the valid area/range in the first information is invalid, the UE considers the stored first information (such as priority and other information) is invalid, or the UE believes that the saved cell/frequency point priority information can no longer be used to perform cell selection or reselection, or the UE needs to re-acquire the cell/frequency point priority information, and then perform cell selection or reselection.

Hereinafter is description regarding the failure of the valid area/range in the first information: The UE determines according to the second information at least one of the location, the TA area, the RAN area, and the cell of the UE. And according to the valid area/range identifier in the first information, determine at least one of the location, the TA area, the RAN area, and the cell corresponding to the slice information (such as priority information). The UE determines whether both the determined area/location/range information is consistent, and if yes, the UE considers that the saved first information (such as priority and other information) is valid, or the UE considers that the currently saved cell/frequency point priority information can be used to perform cell selection or reselection; otherwise, the UE considers that the saved first information (such as priority information) is invalid, or the UE considers that it needs to reacquire the cell/frequency point priority information, and then perform cell selection or reselection.

For example, if any of the valid time and valid area/range of the first information is indicated or configured, and any one of them becomes invalid, the UE considers that the stored first information (such as priority information) is invalid, or the UE considers that it needs to reacquire the cell/frequency point priority information, and then perform cell selection or reselection.

The starting time of the first information may be determined in at least one of the following ways: the time when the UE receives the first information, or the UE starts to use the first information since the time when the UE receives the first information+N (wherein N is a predefined time). For example, the UE considers that this time is the start time of the valid time of the first information.

If the UE needs to reacquire the cell/frequency point priority information, or the UE considers that the saved first information (such as priority information) is invalid, the UE needs to read the system information of the current cell.

If the system information corresponding to the first information is in a non-broadcasting manner, the UE needs to request the gNB to send the system information.

Exemplarily, the UE may send a system information request message, or a UE assistance information request, requesting the gNB to send the system information.

Optionally, if the first information corresponds to a system information block broadcasting mode, the UE may also request the gNB to send the system information. For example, requesting the gNB to also send the first information in a dedicated signaling manner.

Exemplarily, after the gNB receives the request, the gNB may send corresponding system information or a dedicated RRC message, to send the cell/frequency point priority information or the first information to the UE.
b. Before a, the UE acquires and saves the first information. For example, the first information is acquired by the UE in the old cell through the system information of the old cell. After the UE moves to a new cell, it needs to compare the first information obtained in the old cell with the second information obtained in the new cell.

As an example, according to the first information and the second information, the UE determines whether to use the stored cell/frequency point priority information to perform cell selection or reselection, or to perform cell selection or reselection after reacquiring the cell/ frequency point priority information (the UE considers that the original priority information has become invalid).

For example, the UE moves to a new cell, obtains the system information of the new cell, such as SIB1, and obtains the TA area identifier of the new cell, if the TA area identifier of the new cell and the TA area identifier in the first information stored by the UE are the same, and the valid period of the first information has not expired, then the UE considers that the slice-related information in the saved first information, such as the frequency point priority information, is valid, and does not need to obtain new first information from the new cell (such as reading the system information such as the SIB2/3/4/5 of the new cell to acquire the updated first information.)

This embodiment provides a method for obtaining effective use time/location information of the frequency point priority information for cell selection/reselection corresponding to a slice through system information, which ensures the specific use range of the frequency point priority corresponding to the slice, ensures the requirements of network deployment, follows the available standards as much as possible, avoids the complexity caused by UE considering slice information in cell selection/reselection, and at the same time ensures that UE can preferentially access specific slices.

The specific configuration and implementation of the embodiments of the present application have been described above from different perspectives through multiple embodiments. Corresponding to the processing method in at least one of the foregoing embodiments, the embodiment of the present application further provides a terminal device 100, referring to FIG. 9, which includes:
a receiving module 110, configured to receive first information, wherein the first information includes network slicing information and a restriction condition corresponding to the network slicing information, and the first information is used by the terminal device to determine priority information of a cell or frequency point used when performing cell selection or reselection.

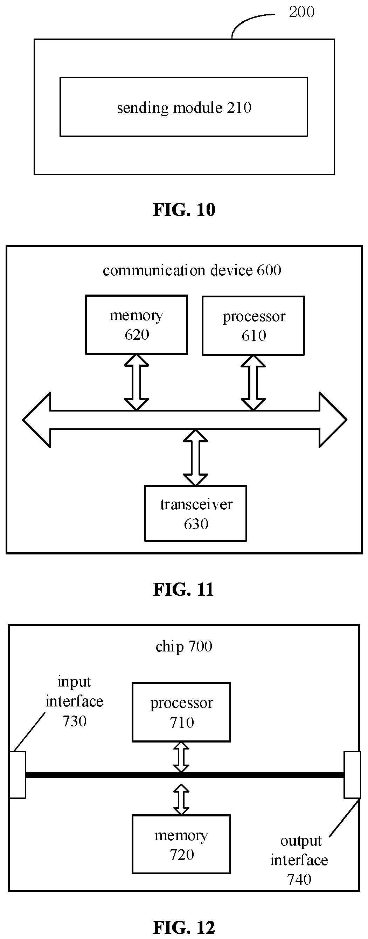

Corresponding to the processing method in at least one of the above embodiments, this embodiment of the present application further provides a network device 200, referring to FIG. 10, which includes:
a sending module 210, configured to send first information to a terminal device, wherein the first information includes network slicing information and a restriction condition corresponding to the network slicing information, and the first information is used by the terminal device to determine priority information of a cell or frequency point used when performing cell selection or reselection.

According to the network device in the embodiment of the present application, optionally, the restriction condition corresponding to the network slicing information includes at least one of a valid period of the network slicing information and a valid range of the network slicing information.

According to an embodiment of the present application, optionally, the valid period of the network slicing information is a finite value, wherein the valid period includes a start time and an end time, or the valid period includes a valid time interval.

Optionally, the valid period of the network slicing information is an infinite value, wherein the valid period includes a start time.

Optionally, the start time of the valid period of the network slicing information includes at least one of the following: the time when the terminal device receives the first information, and the time corresponding to the end of a predetermined time period after the time when the terminal device receives the first information.

According to the network device in the embodiment of the present application, optionally, the valid range of the network slicing information is at least one of the following: cell, cell list, radio access network RAN area, RAN area list, tracking area TA, TA list, frequency point, frequency point list, public land mobile network PLMN, and PLMN list.

According to the network device of the embodiment of the present application, optionally, the valid range of the network slice information is identified by at least one of the following: cell identity, cell identity list, RAN area code RAN area code, RAN area Code list RAN area code list, tracking area code TA code, tracking area code list TA code list, frequency identification, frequency identification list, PLMN identification, and PLMN identification list.

According to the network device according to the embodiment of the present application, optionally, the network slice information includes at least one of the following: an identification of the network slice, a priority of the network slice, a correspondence between the network slice and a frequency point, a correspondence between the network slice and a cell, a priority of a frequency point corresponding to the network slice, and a priority of a cell corresponding to the network slice.

According to the network device in the embodiment of the present application, optionally, the first information is information per UE; or, the first information is information per slice or information per slice list; or, the first information is information per cell; or, the first information is information per slice per UE, or information per slice list per UE; or, the first information is information per slice per cell or information per slice list per cell.

According to the network device in the embodiment of the present application, optionally, the first information is carried by system information, and/or, the first information is carried by dedicated radio resource control RRC information.

According to the network device in the embodiment of the present application, optionally, if the terminal device is in the RRC inactive state RRC_INACTIVE, the first information is the same as or different from the RAN notification area RNA.

According to the network device in the embodiment of the present application, optionally, the terminal device is in the RRC inactive state, and after the terminal device determines according to the first information and the second information not to use the cell or frequency point priority information saved in the terminal device and/or updating the cell or frequency point priority information, the method further includes:

The first network device receives request information or update request information sent by the second network device to request priority information of the cell or frequency point of the terminal device;

The first network device determines whether to send the context information of the terminal device to the second network device; wherein the second information includes the location information of the terminal device and/or the current cell information of the terminal device; the second network device is the network device corresponding to the current cell of the terminal device.

According to the network device in the embodiment of the present application, optionally, if it is determined not to send the context information of the terminal device to the second network device, the first network device generates and sends an RRC release message to the second network device, so that the second network device sends the RRC release message to the terminal device.

If it is determined to send the context information of the terminal device to the second network device, the first network device or the second network device generates and sends an RRC release message to the terminal device; wherein the RRC release message carries the priority information of the cell or the frequency point.

According to the network device in the embodiment of the present application, optionally, the RRC release message includes an RRC release packet data convergence protocol protocol data unit RRCRelease PDCP PDU.

According to the network device of the embodiment of the present application, optionally, the information of the current cell of the terminal device includes at least one of the following: the identifier of the current cell, the identifier of the tracking area TA where the current cell is located, the wireless access network where the current cell is located, the identifier of the RAN area, the identifier of the frequency point, and the identifier of the PLMN.

According to the network device in the embodiment of the present application, optionally, the terminal device determines according to the second information and the restriction condition corresponding to the network slice information in the first information, whether the first information is valid, and/or, whether to request the updated priority information of the cell or frequency point.

According to the network device in the embodiment of the present application, optionally, if the first information is valid, the terminal device determines to use the priority information of the cell or frequency point stored in the terminal device, and/or does not request an update priority information of the cell or frequency point; if the first information is invalid, the terminal device determines not to use the priority information of the cell or frequency point saved in the terminal device, and/or use an updated priority information of the cell or frequency point.

According to the network device in the embodiment of the present application, optionally, if the system information carrying the first information is information sent in a non-broadcast manner, in response to the request of the terminal device, the first network device sends the system information to the terminal device; and/or, if the system information carrying the first information is information sent by broadcast, the first network device sends system information corresponding to the first information; and/or, if the system information carrying the first information is information sent by broadcast, in response to the request of the terminal device, the first network device sends the system information carrying the first information to the terminal device; wherein, the system information includes a master information block MIB or a system information block SIB.

According to the network device in the embodiment of the present application, optionally, if the system information carrying the first information is information sent in a non-broadcast manner, in response to the request of the terminal device, the first network device sends the dedicated information carrying the first information to the terminal device; and/or, if the system information carrying the first information is broadcast information, in response to the request of the terminal device, the first network device sends dedicated information carrying the first information to the terminal device; wherein the dedicated information includes at least one of the following: an RRC release message, an RRC reestablishment message, an RRC reconfiguration message, and an RRC rejection message.

Optionally, the first information is invalid.

According to the network device in the embodiment of the present application, optionally, if the first network sends system information and dedicated information to the terminal device, the terminal device determines that the first information carried in the dedicated information is prevailed.

According to the network device in the embodiment of the present application, optionally, if the terminal device is in an inactive state, the network device sends an RRC release message carrying the first information to the terminal device, and the network device does not expect terminal device to obtain the first information by reading the system information.

According to the network device in the embodiment of the present application, optionally, the terminal device determining whether the first information is valid according to the second information and the restriction condition corresponding to the network slice information in the first information, including:
if the valid period of the network slicing information in the restriction condition expires or times out, the first information is invalid; and/or, if the valid range of the network slicing information in the restriction condition is invalid, the first information is invalid; wherein, if the location information of the terminal device and/or information of the current cell of the terminal device in the second information does not match the valid range, the valid range is invalid.

According to the network device in the embodiment of the present application, optionally, if it is determined not to use the priority information of the cell or frequency point saved in the terminal device or to update the priority information of the cell or frequency point, in response to the dedicated message or dedicated process triggered by the terminal device, the priority information of the cell or frequency point of the terminal device is sent to the terminal device, at least for reacquiring the priority information of the cell or frequency point.

According to the network device of the embodiment of the present application, optionally, the dedicated message includes an RRC connection establishment request message or an RRC connection recovery request message; and/or, the dedicated process includes at least one of the following: a random access RACH process, system information request process, terminal device UE auxiliary information reporting process.

According to the network device of the embodiment of the present application, optionally, the dedicated message or the cause value in the dedicated process carries a request message, which is used to reacquire the priority information of the cell or frequency point, or obtain updated priority information of the cell or frequency point.

The terminal device 100 and the network device 200 in the embodiment of the present application can realize the corresponding functions of the terminal device in the foregoing method embodiments, and for the corresponding processes, functions, implementations and beneficial effects of each module (submodule, unit or component, etc.) in the terminal device 100 and the network device 200, refer to the corresponding descriptions in the foregoing method embodiments, and details are not repeated here.

It should be noted that the functions described by the various modules (submodules, units or components, etc.) in the terminal device 100 and the network device 200 in the embodiment of the present application can be realized by different modules (submodules, units or components, etc.), can also be realized by the same module (submodule, unit or component, etc.), for example, the first sending module and the second sending module can be different modules, or they can be the same module, both of which can realize the implementation of the corresponding function of the terminal device of the embodiment of the present application.

FIG. 11 is a schematic structural diagram of a communication device 600 according to an embodiment of the present application. The communication device 600 includes a processor 610, and the processor 610 can invoke and run a computer program from a memory, so as to implement the method in the embodiment of the present application.

Optionally, the communication device 600 may further include a memory 620. Wherein, the processor 610 can invoke and run a computer program from the memory 620, so as to implement the method in the embodiment of the present application.

The memory 620 may be an independent device independent of the processor 610, or may be integrated in the processor 610.

Optionally, the communication device 600 may further include a transceiver 630, and the processor 610 may control the transceiver 630 to communicate with other devices, specifically, to send information or data to other devices, or receive information or data sent by other devices.

The transceiver 630 may include a transmitter and a receiver. The transceiver 630 may further include an antenna(s), and the number of the antenna may be one or more.

Optionally, the communication device 600 may be the network device of the embodiment of the present application, and the communication device 600 may implement the corresponding processes implemented by the network device in the methods of the embodiment of the present application. For the sake of brevity, it will not be repeated herein.

Optionally, the communication device 600 may be the terminal device, and the communication device 600 may implement the corresponding processes implemented by the method provided by terminal device in the embodiments of the present application. For the sake of brevity, it will not be repeated herein.

FIG. 12 is a schematic structural diagram of a chip 700 according to an embodiment of the present application. The chip 700 includes a processor 710, and the processor 710 can invoke and run a computer program from a memory, so as to implement the method in the embodiment of the present application.

Optionally, the chip 700 may further include a memory 720. The processor 710 may invoke and run a computer program from the memory 720, so as to implement the method in the embodiment of the present application.

The memory 720 may be an independent device independent of the processor 710, or may be integrated in the processor 710.

Optionally, the chip 700 may also include an input interface 730. The processor 710 can control the input interface 730 to communicate with other devices or chips, specifically, can obtain information or data sent by other devices or chips.

Optionally, the chip 700 may also include an output interface 740. The processor 710 can control the output interface 740 to communicate with other devices or chips, specifically, can output information or data to other devices or chips.

Optionally, the chip can be applied to the network device in the embodiments of the present application, and the chip can implement the corresponding processes implemented by the network device in the methods of the embodiments of the present application. For the sake of brevity, it will not be repeated herein.

Optionally, the chip can be applied to the terminal device of the embodiment of FIG. 6 of the present application, and the chip can implement the corresponding processes implemented by the terminal device in the methods of the embodiments of the present application. For the sake of brevity, it will not be repeated herein.

It should be understood that the chip mentioned in the embodiment of the present application may also be referred to as a system level chip, a system chip, a chip system or a system-on-chip.

The above-mentioned processor may be a general-purpose processor, a digital signal processor (DSP), a field programmable gate array (FPGA), an application specific integrated circuit (ASIC) or other programmable logic devices, transistor logic devices, discrete hardware components and the like. The above general-purpose processor may be a microprocessor, or the processor may be any conventional processor, or the like.

The above memory may be a volatile memory or a nonvolatile memory, or may include both volatile and nonvolatile memories. Among them, the non-volatile memory can be read-only memory (ROM), programmable read-only memory (PROM), erasable programmable read-only memory (Erasable PROM, EPROM), electrically programmable Erase Programmable Read-Only Memory (Electrically EPROM, EEPROM) or Flash. The volatile memory may be Random Access Memory (RAM).

It should be understood that the above-mentioned memory is illustrative but not restrictive. For example, the memory in the embodiment of the present application may also be a static random access memory (static RAM, SRAM), a dynamic random access memory (dynamic RAM, DRAM), Synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchronous connection Dynamic random access memory (synch link DRAM, SLDRAM) and direct memory bus random access memory (Direct Rambus RAM, DR RAM), etc. That is, the memory in the embodiments of the present application is intended to include, but not be limited to, these and any other suitable types of memory.

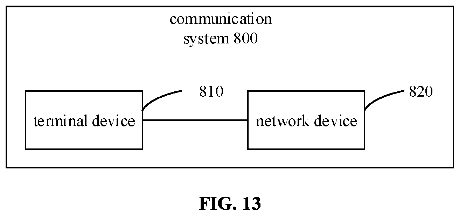

FIG. 13 is a schematic block diagram of a communication system 800 according to an embodiment of the present application. The communication system 800 includes a terminal device 810 and a network device 820.

The terminal device 810 can be used to realize the corresponding functions realized by the terminal device in the method of the embodiments of the present application; and the network device 820 can be used to realize the corresponding functions realized by the network device in the method of the embodiments of the present application. For the sake of brevity, details are not repeated here.

In the above embodiments, all or part of them may be implemented by software, hardware, firmware or any combination thereof. When implemented using software, it may be implemented in whole or in part in the form of a computer program product. The computer program product includes one or more computer instructions. When the computer program instructions are loaded and executed on the computer, the processes or functions according to the embodiments of the present application will be implemented in whole or in part. The computer can be a general-purpose computer, a special purpose computer, a computer network, or other programmable device. The computer instructions may be stored in or transmitted from one computer-readable storage medium to another computer-readable storage medium, for example, the computer instructions may be transferred from a website, computer, server, or data center by wire (such as coaxial cable, optical fiber, digital subscriber line (DSL)) or wireless (such as infrared, wireless, microwave, etc.) to another website site, computer, server or data center. The computer-readable storage medium may be any available medium that can be accessed by a computer, or a data storage device such as a server or a data center integrated with one or more available media. The available medium may be a magnetic medium (such as a floppy disk, a hard disk, or a magnetic tape), an optical medium (such as a DVD), or a semiconductor medium (such as a solid state disk (SSD)), etc.

It should be understood that, in various embodiments of the present application, the sequence numbers of the above-mentioned processes do not mean the order of execution, and the execution order of the processes should be determined by their functions and internal logic, and should not be used in the embodiments of the present application. The implementation process constitutes any limitation.

Those skilled in the art can clearly understand that for the convenience and brevity of the description, the specific operating process of the above-described system, device and unit can refer to the corresponding process in the foregoing method embodiment, which will not be repeated here.

The above is only the specific implementation of the application, but the scope of protection of the application is not limited thereto. Anyone familiar with the technical field can easily think of changes or substitutions within the technical scope disclosed in the application, which should be covered within the scope of protection of this application. Therefore, the protection scope of the present application should be based on the protection scope of the claims.

## Claims

1. A method for processing network slicing information, applied to a terminal device, the method comprising:
receiving, by the terminal device, first information, wherein the first information comprises network slicing information and a restriction condition corresponding to the network slicing information, and the first information is used by the terminal device to determine priority information of a cell or frequency point used when performing cell selection or reselection.

2. The method according to claim 1, wherein the restriction condition corresponding to the network slicing information comprises at least one of:
a valid period of the network slicing information and a valid range of the network slicing information.

3. The method according to claim 2, wherein,
the valid period of the network slice information is a finite value, wherein the valid period comprises a start time and an end time, or, the valid period comprises a valid time interval; and/or,
the valid period of the network slicing information comprises at least one of a time when the terminal device receives the first information, and a time corresponding to an end of a predetermined time period after the time when the terminal device receives the first information.

4. The method according to claim 2, wherein,
the valid period of the network slicing information is an infinite value, wherein the valid period comprises a start time; and/or,
the valid period of the network slicing information includes at least one of a time when the terminal device receives the first information, and a time corresponding to an end of a predetermined time period after the time when the terminal device receives the first information.

5. The method according to any one of claims 2 to 4, wherein,
the valid range of the network slicing information is at least one of a cell, a cell list, a radio access network RAN area, a RAN area list, a tracking area TA, a TA list, a frequency point, a frequency point list, a public land mobile network PLMN, and a PLMN list.

6. The method according to any one of claims 2 to 5, wherein,
the valid range of the network slicing information is identified by at least one of: a cell identity, a cell identity list, a RAN area code, a RAN area code list, a TA code, a TA code list, a frequency identification, a frequency identification list, a PLMN identification, and a PLMN identification list.

7. The method according to any one of claims 1 to 6, wherein, the network slicing information comprises at least one of
an identification of the network slice, a priority of the network slice, a correspondence between the network slice and a frequency point, a correspondence between the network slice and a cell, a priority of a frequency point corresponding to the network slice, and a priority of a cell corresponding to the network slice.

8. The method according to any one of claims 1 to 7, wherein,
the first information is information per LTE; or,
the first information is information per slice or information per slice list; or,
the first information is information per cell; or,
the first information is information per slice per UE, or information per slice list per UE; or,
the first information is information per slice per cell or information per slice list per cell.

9. The method according to any one of claims 1 to 8, wherein,
the first information is carried by system information, and/or, the first information is carried by dedicated radio resource control RRC information.

10. The method according to any one of claims 1 to 9, wherein,
if the terminal device is in an RRC inactive state RRC_INACTIVE, the first information is same as or different from a RAN notification area RNA.

11. The method according to any one of claims 1 to 10, further comprising:
determining, by the terminal device, second information, wherein the second information comprises location information of the terminal device and/or current cell information of the terminal device; and
determining, by the terminal device according to the first information and the second information, whether to use the priority information of the cell or frequency point stored in the terminal device, and/or whether to update the priority information of the cell or frequency point.

12. The method according to claim 11, wherein,
the current cell information of the terminal device comprises at least one of an identifier of the current cell, an identifier of a tracking area TA where the current cell is located, and an identifier of a RAN area where the current cell is located, an identifier of a frequency point, and an identifier of a PLMN.

13. The method according to claim 11 or 12, wherein,
the determining, by the terminal device according to the first information and the second information, whether to use the priority information of the cell or frequency point stored in the terminal device, and/or whether to update the priority information of the cell or frequency point, comprises:
determining, by the terminal device according to the second information and the restriction condition corresponding to the network slicing information in the first information, whether the first information is valid, and/or, whether to request updated priority information of the cell or frequency point.

14. The method according to claim 13, wherein,
if the first information is valid, determining, by the terminal device, to use the priority information of the cell or frequency point stored in the terminal device, and/or does not request updated priority information of the cell or frequency point; and/or
if the first information is invalid, determining, by the terminal device, not to use the priority information of the cell or frequency point stored in the terminal device, and/or use updated priority information of the cell or frequency point.

15. The method according to claim 13 or 14, further comprising:
if system information carrying the first information is information sent in a non-broadcast manner, requesting, by the terminal device, the network device to send the system information; and/or,
if the system information carrying the first information is information sent by broadcast, reading, by the terminal device, corresponding system information of the first information; and/or,
if the system information carrying the first information is information sent by broadcast, requesting, by the terminal device, the network device to send the system information carrying the first information,
wherein, the system information comprises a master information block MIB or a system information block SIB.

16. The method according to claim 13 or 14, further comprising:
if system information carrying the first information is information sent in a non-broadcast manner, requesting, by the terminal device, the network device to send dedicated information carrying the first information; and/or,
if the system information carrying the first information is information sent by broadcast, requesting, by the terminal device, the network device to send dedicated information carrying the first information;
wherein the dedicated information comprises at least one of: an RRC release message, an RRC reestablishment message, an RRC reconfiguration message, and an RRC rejection message.

17. The method according to claim 15 or 16, wherein the first information is invalid.

18. The method according to any one of claims 15 to 17, wherein, if the first information is obtained through both the system information and the dedicated information, the first information carried in the dedicated information is prevailed.

19. The method according to any one of claims 15 to 17, wherein, if the terminal device is in an inactive state, the first information is obtained by the terminal through an RRC release message, and the first information is not obtained by reading the system information.

20. The method according to any one of claims 13 to 19, wherein the determining, by the terminal device according to the second information and the restriction condition corresponding to the network slicing information in the first information, whether the first information is valid, comprises:
if the valid period of the network slice information in the restriction condition expires or times out, the first information is invalid; and/or,
if the valid range of the network slicing information in the restriction condition is invalid, the first information is invalid;
wherein, if the location information of the terminal device and/or the current cell information of the terminal device in the second information does not match the valid range, the valid range is invalid.

21. The method according to any one of claims 11 to 20, further comprising:
triggering, by the terminal device, a dedicated message or a dedicated process, at least for reacquiring the priority information of the cell or frequency point, if it is determined not to use the priority information of the cell or frequency point saved in the terminal device or to update the priority information of the cell or frequency point.

22. The method according to claim 21, wherein,
the dedicated message comprises an RRC connection establishment request message or an RRC connection recovery request message; and/or,
the dedicated process comprises at least one of: a random access RACH process, a system information request process, and a UE auxiliary information reporting process.

23. The method according to claim 21 or 22, wherein,
a request message is carried by the terminal device in a cause value in the dedicated process or the dedicated message, to reacquire the priority information of the cell or frequency point, or obtain updated priority information of the cell or frequency point.

24. The method according to any one of claims 21 to 23, wherein the terminal device is in an RRC inactive state, and the method further comprises:
after sending the dedicated message or dedicated process to the network device, or after sending the update request to the network device, performing, by the terminal device, one of
receiving, by the terminal device, an RRC release message sent by the network device, which carries the priority information of the cell or frequency point;
reading, by the terminal device, system information sent by the network device, which carries the priority information of the cell or frequency point;
obtaining, by the terminal device, dedicated information sent by the network device, which carries the priority information of the cell or frequency point.

25. The method according to claim 24, wherein,
the RRC release message comprises an RRC release packet data convergence protocol protocol data unit RRCRelease PDCP PDU.

26. A method for processing network slicing information, applied to a first network device, the method comprising:
sending, by the first network device, first information to a terminal device, wherein the first information comprises network slicing information and a restriction condition corresponding to the network slicing information, and the first information is used by the terminal device to determine priority information of a cell or frequency point used when performing cell selection or reselection.

27. The method according to claim 26, wherein the restriction condition corresponding to the network slicing information comprises at least one of:
a valid period of the network slicing information and a valid range of the network slicing information.

28. The method according to claim 27, wherein,
the valid period of the network slice information is a finite value, wherein the valid period comprises a start time and an end time, or, the valid period comprises a valid time interval; and/or,
the valid period of the network slicing information comprises at least one of a time when the terminal device receives the first information, and a time corresponding to an end of a predetermined time period after the time when the terminal device receives the first information.

29. The method according to claim 27, wherein,
the valid period of the network slicing information is an infinite value, wherein the valid period comprises a start time; and/or,
the valid period of the network slicing information includes at least one of a time when the terminal device receives the first information, and a time corresponding to an end of a predetermined time period after the time when the terminal device receives the first information.

30. The method according to any one of claims 27 to 28, wherein,
the valid range of the network slicing information is at least one of a cell, a cell list, a radio access network RAN area, a RAN area list, a tracking area TA, a TA list, a frequency point, a frequency point list, a public land mobile network PLMN, and a PLMN list.

31. The method according to any one of claims 26 to 30, wherein,
the valid range of the network slicing information is identified by at least one of: a cell identity, a cell identity list, a RAN area code, a RAN area code list, a TA code, a TA code list, a frequency identification, a frequency identification list, a PLMN identification, and a PLMN identification list.

32. The method according to any one of claims 26 to 31, wherein, the network slicing information comprises at least one of
an identification of the network slice, a priority of the network slice, a correspondence between the network slice and a frequency point, a correspondence between the network slice and a cell, a priority of a frequency point corresponding to the network slice, and a priority of a cell corresponding to the network slice.

33. The method according to any one of claims 26 to 32, wherein,
the first information is information per UE; or,
the first information is information per slice or information per slice list; or,
the first information is information per cell; or,
the first information is information per slice per UE, or information per slice list per UE; or,
the first information is information per slice per cell or information per slice list per cell.

34. The method according to any one of claims 26 to 33, wherein,
the first information is carried by system information, and/or, the first information is carried by dedicated radio resource control RRC information.

35. The method according to any one of claims 26 to 34, wherein,
if the terminal device is in an RRC inactive state RRC_INACTIVE, the first information is same as or different from a RAN notification area RNA.

36. The method according to any one of claims 26 to 35, wherein, the terminal device is in an RRC inactive state, and after the terminal device determining not to use the priority information of the cell or the frequency point saved in the terminal device and/or update the priority information of the cell or the frequency point, the method further comprises:
receiving, by the first network device, request information or update request information sent by a second network device to request the priority information of the cell or frequency point of the terminal device; and
determining, by the first network device, whether to send context information of the terminal device to the second network device;
wherein, the second information comprises location information of the terminal device and/or current cell information of the terminal device; the second network device is a network device corresponding to the current cell of the terminal device.

37. The method according to claim 36, further comprising:
if it is determined not to send the context information of the terminal device to the second network device, generating and sending, by the first network device, an RRC release message to the second network device, to allow the second network device to send the RRC release message to the terminal device; and
if it is determined to send the context information of the terminal device to the second network device, generating and sending, by the first network device or the second network device, the RRC release message to the terminal device,
wherein the priority information of the cell or frequency point is carried in the RRC release message.

38. The method according to claim 37, wherein,
the RRC release message comprises an RRC release packet data convergence protocol protocol data unit RRCRelease PDCP PDU.

39. The method according to any one of claims 36 to 38, wherein,
the current cell information of the terminal device comprises at least one of: an identifier of the current cell, an identifier of a tracking area TA where the current cell is located, and an identifier of a RAN area where the current cell is located, an identifier of a frequency point, and an identifier of a PLMN.

40. The method according to any one of claims 36 to 39, wherein,
determining, by the terminal device according to the second information and the restriction condition corresponding to the network slicing information in the first information, whether the first information is valid, and/or, whether to request updated priority information of the cell or frequency point.

41. The method according to claim 40, wherein,
if the first information is valid, determining, by the terminal device, to use the priority information of the cell or frequency point stored in the terminal device, and/or does not request updated priority information of the cell or frequency point; and/or
if the first information is invalid, determining, by the terminal device, not to use the priority information of the cell or frequency point stored in the terminal device, and/or use updated priority information of the cell or frequency point.

42. The method according to claim 40 or 41, further comprising:
if system information carrying the first information is information sent in a non-broadcast manner, sending, by the first network device in response to a request of the terminal device, the system information to the terminal device; and/or,
if the system information carrying the first information is information sent by broadcast, sending, by the first network device, system information corresponding to the first information; and/or,
if the system information carrying the first information is information sent by broadcast, sending, by the first network device in response to a request of the terminal device, the system information carrying the first information to the terminal device,
wherein, the system information comprises a master information block MIB or a system information block SIB.

43. The method according to claim 40 or 41, further comprising:
if system information carrying the first information is information sent in a non-broadcast manner, sending, by the first network device in response to a request of the terminal device, dedicated information carrying the first information to the terminal device; and/or,
if the system information carrying the first information is information sent by broadcast, sending, by the first network device in response to a request of the terminal device, dedicated information carrying the first information to the terminal device;
wherein the dedicated information comprises at least one of: an RRC release message, an RRC reestablishment message, an RRC reconfiguration message, and an RRC rejection message.

44. The method according to claim 42 or 43, wherein the first information is invalid.

45. The method according to any one of claims 42 to 44, wherein, if the first network device sends the system information and the dedicated information to the terminal device, the terminal device determines that the first information carried in the dedicated information is prevailed.

46. The method according to any one of claims 42 to 44, wherein, if the terminal device is in an inactive state, the network device sends the RRC release message carrying the first information to the terminal device, and the network device does not expect the terminal device to obtain the first information by reading the system information.

47. The method according to any one of claims 40 to 46, wherein the determining, by the terminal device according to the second information and the restriction condition corresponding to the network slicing information in the first information, whether the first information is valid, comprises:
if the valid period of the network slice information in the restriction condition expires or times out, the first information is invalid; and/or,
if the valid range of the network slicing information in the restriction condition is invalid, the first information is invalid;
wherein, if the location information of the terminal device and/or the current cell information of the terminal device in the second information does not match the valid range, the valid range is invalid.

48. The method according to any one of claims 36 to 47, further comprising:
sending the priority information of the cell or frequency point of the terminal device to the terminal device in response to a dedicated message or a dedicated process triggered by the terminal device, at least for reacquiring the priority information of the cell or frequency point, if it is determined not to use the priority information of the cell or frequency point saved in the terminal device or to update the priority information of the cell or frequency point.

49. The method according to claim 48, wherein,
the dedicated message comprises an RRC connection establishment request message or an RRC connection recovery request message; and/or,
the dedicated process comprises at least one of: a random access RACH process, a system information request process, and a UE auxiliary information reporting process.

50. The method according to claim 48 or 49, wherein,
a request message is carried in a cause value in the dedicated process or the dedicated message, to reacquire the priority information of the cell or frequency point, or obtain updated priority information of the cell or frequency point.

51. A terminal device, comprising:
a receiving module, configured to receive first information, wherein the first information comprises network slicing information and a restriction condition corresponding to the network slicing information, and the first information is used by the terminal device to determine priority information of a cell or frequency point used when performing cell selection or reselection.

52. The terminal device according to claim 51, wherein the restriction condition corresponding to the network slicing information comprises at least one of
a valid period of the network slicing information and a valid range of the network slicing information.

53. The terminal device according to claim 52, wherein,
the valid period of the network slice information is a finite value, wherein the valid period comprises a start time and an end time, or, the valid period comprises a valid time interval; and/or,
the valid period of the network slicing information comprises at least one of: a time when the terminal device receives the first information, and a time corresponding to an end of a predetermined time period after the time when the terminal device receives the first information.

54. The method according to claim 52, wherein,
the valid period of the network slicing information is an infinite value, wherein the valid period comprises a start time; and/or,
the valid period of the network slicing information includes at least one of: a time when the terminal device receives the first information, and a time corresponding to an end of a predetermined time period after the time when the terminal device receives the first information.

55. The terminal device according to claim 52 or 53, wherein,
the valid range of the network slicing information is at least one of: a cell, a cell list, a radio access network RAN area, a RAN area list, a tracking area TA, a TA list, a frequency point, a frequency point list, a public land mobile network PLMN, and a PLMN list.

56. The terminal device according to any one of claims 52 to 55, wherein,
the valid range of the network slicing information is identified by at least one of: a cell identity, a cell identity list, a RAN area code, a RAN area code list, a TA code, a TA code list, a frequency identification, a frequency identification list, a PLMN identification, and a PLMN identification list.

57. The terminal device according to any one of claims 51 to 56, wherein, the network slicing information comprises at least one of:
an identification of the network slice, a priority of the network slice, a correspondence between the network slice and a frequency point, a correspondence between the network slice and a cell, a priority of a frequency point corresponding to the network slice, and a priority of a cell corresponding to the network slice.

58. The terminal device according to any one of claims 51 to 57, wherein,
the first information is information per UE; or,
the first information is information per slice or information per slice list; or,
the first information is information per cell; or,
the first information is information per slice per UE, or information per slice list per UE; or,
the first information is information per slice per cell or information per slice list per cell.

59. The terminal device according to any one of claims 51 to 58, wherein,
the first information is carried by system information, and/or, the first information is carried by dedicated radio resource control RRC information.

60. The terminal device according to any one of claims 51 to 59, wherein,
if the terminal device is in an RRC inactive state RRC_INACTIVE, the first information is same as or different from a RAN notification area RNA.

61. The terminal device according to any one of claims 51 to 60, further comprising:
determining, by the terminal device, second information, wherein the second information comprises location information of the terminal device and/or current cell information of the terminal device; and
determining, by the terminal device according to the first information and the second information, whether to use the priority information of the cell or frequency point stored in the terminal device, and/or whether to update the priority information of the cell or frequency point.

62. The terminal device according to claim 61, wherein,
the current cell information of the terminal device comprises at least one of: an identifier of the current cell, an identifier of a tracking area TA where the current cell is located, and an identifier of a RAN area where the current cell is located, an identifier of a frequency point, and an identifier of a PLMN.

63. The terminal device according to claim 61 or 62, wherein,
the determining, by the terminal device according to the first information and the second information, whether to use the priority information of the cell or frequency point stored in the terminal device, and/or whether to update the priority information of the cell or frequency point, comprises:
determining, by the terminal device according to the second information and the restriction condition corresponding to the network slicing information in the first information, whether the first information is valid, and/or, whether to request updated priority information of the cell or frequency point.

64. The terminal device according to claim 63, wherein,
if the first information is valid, determining, by the terminal device, to use the priority information of the cell or frequency point stored in the terminal device, and/or does not request updated priority information of the cell or frequency point; and/or
if the first information is invalid, determining, by the terminal device, not to use the priority information of the cell or frequency point stored in the terminal device, and/or use updated priority information of the cell or frequency point.

65. The terminal device according to claim 63 or 64, further comprising:
if system information carrying the first information is information sent in a non-broadcast manner, requesting, by the terminal device, the network device to send the system information; and/or,
if the system information carrying the first information is information sent by broadcast, reading, by the terminal device, corresponding system information of the first information; and/or,
if the system information carrying the first information is information sent by broadcast, requesting, by the terminal device, the network device to send the system information carrying the first information,
wherein, the system information comprises a master information block MIB or a system information block SIB.

66. The terminal device according to claim 63 or 64, further comprising:
if system information carrying the first information is information sent in a non-broadcast manner, requesting, by the terminal device, the network device to send dedicated information carrying the first information; and/or,
if the system information carrying the first information is information sent by broadcast, requesting, by the terminal device, the network device to send dedicated information carrying the first information;
wherein the dedicated information comprises at least one of: an RRC release message, an RRC reestablishment message, an RRC reconfiguration message, and an RRC rejection message.

67. The terminal device according to claim 65 or 66, wherein the first information is invalid.

68. The terminal device according to any one of claims 65 to 67, wherein, if the first information is obtained through both the system information and the dedicated information, the first information carried in the dedicated information is prevailed.

69. The terminal device according to any one of claims 65 to 67, wherein, if the terminal device is in an inactive state, the first information is obtained by the terminal through an RRC release message, and the first information is not obtained by reading the system information.

70. The terminal device according to any one of claims 63 to 69, wherein the determining, by the terminal device according to the second information and the restriction condition corresponding to the network slicing information in the first information, whether the first information is valid, comprises:
if the valid period of the network slice information in the restriction condition expires or times out, the first information is invalid; and/or,
if the valid range of the network slicing information in the restriction condition is invalid, the first information is invalid;
wherein, if the location information of the terminal device and/or the current cell information of the terminal device in the second information does not match the valid range, the valid range is invalid.

71. The terminal device according to any one of claims 61 to 70, further comprising:
triggering, by the terminal device, a dedicated message or a dedicated process, at least for reacquiring the priority information of the cell or frequency point, if it is determined not to use the priority information of the cell or frequency point saved in the terminal device or to update the priority information of the cell or frequency point.

72. The terminal device according to claim 71, wherein,
the dedicated message comprises an RRC connection establishment request message or an RRC connection recovery request message; and/or,
the dedicated process comprises at least one of: a random access RACH process, a system information request process, and a UE auxiliary information reporting process.

73. The terminal device according to claim 71 or 72, wherein,
a request message is carried by the terminal device in a cause value in the dedicated process or the dedicated message, to reacquire the priority information of the cell or frequency point, or obtain updated priority information of the cell or frequency point.

74. The terminal device according to any one of claims 71 to 73, wherein the terminal device is in an RRC inactive state, and the terminal device further comprises:
after sending the dedicated message or dedicated process to the network device, or after sending the update request to the network device, performing, by the terminal device, one of:
receiving, by the terminal device, an RRC release message sent by the network device, which carries the priority information of the cell or frequency point;
reading, by the terminal device, system information sent by the network device, which carries the priority information of the cell or frequency point;
obtaining, by the terminal device, dedicated information sent by the network device, which carries the priority information of the cell or frequency point.

75. The terminal device according to claim 74, wherein,
the RRC release message comprises an RRC release packet data convergence protocol protocol data unit RRCRelease PDCP PDU.

76. A network device, comprising:
a sending module, configured to send first information to a terminal device, wherein the first information comprises network slicing information and a restriction condition corresponding to the network slicing information, and the first information is used by the terminal device to determine priority information of a cell or frequency point used when performing cell selection or reselection.

77. A terminal device, comprising: a processor and a memory, the memory is used to store computer programs, the processor is configured to call and run the computer programs stored in the memory, to perform the method according to any one of claims 1 to 25.

78. A network device, comprising: a processor and a memory, the memory is used to store a computer program, the processor is configured to call and run the computer program stored in the memory, to perform the method according to any one of claims 26 to 50.

79. A chip comprising:
a processor configured to call and run a computer program from a memory, so that a device installed with the chip performs the method according to any one of claims 1 to 50.

80. A computer-readable storage medium for storing a computer program, wherein,
the computer program causes a computer to perform the method according to any one of claims 1 to 50.

81. A computer program product comprising computer program instructions, wherein,
the computer program instructions cause a computer to perform the method according to any one of claims 1 to 50.

82. A computer program that causes a computer to perform the method according to any one of claims 1 to 50.
